# EUROPÄISCHE PATENTSCHRIFT

(11) **EP 3 194 248 B1**
(45) Veröffentlichungstag und Bekanntmachung des Hinweises auf die Patenterteilung: **21.11.2018**
(21) Anmeldenummer: 15749813.0
(22) Anmeldetag: 13.08.2015
(51) Int. Cl.: B62D 7/20, B62D 7/16, B62D 17/00

(54) **SPUR- ODER LENKSTANGE FÜR EIN FAHRZEUG**
TRACK ROD OR STEERING ROD FOR A VEHICLE
BARRE D'ACCOUPLEMENT OU DE DIRECTION POUR VÉHICULE

(30) Priorität: 15.09.2014 DE 102014218432
(43) Veröffentlichungstag der Anmeldung: 26.07.2017
(73) Patentinhaber: ZF Friedrichshafen AG, 88046 Friedrichshafen (DE)
(72) Erfinder: ADLER, Andreas, 49152 Bad Essen (DE)
(86) Internationale Anmeldenummer: PCT/EP2015/068623
(87) Internationale Veröffentlichungsnummer: WO 2016/041706

(56) Entgegenhaltungen:
- EP-A1- 1 062 144
- WO-A1-2012/081800
- US-A- 6 074 125

## Beschreibung

Die Erfindung betrifft eine Spur- oder Lenkstange für ein Fahrzeug, mit einem Rohr, welches in einem sich in einer axialen Richtung erstreckenden Rohrendbereich ein in einer ersten Drehrichtung gängiges Innengewinde und wenigstens einen in axialer Richtung verlaufenden Schlitz aufweist, einer in den Rohrendbereich des Rohrs eingeschraubten und sich aus diesem mit einem Betätigungsbereich heraus erstreckenden Justierhülse, die ein in einer der ersten Drehrichtung entgegengesetzten zweiten Drehrichtung gängiges Innengewinde und wenigstens einen in axialer Richtung verlaufenden Schlitz aufweist, der zumindest bereichsweise in dem Rohr angeordnet ist, einem Gelenk, welches einen axialen Schaft aufweist und mit diesem in die Justierhülse eingeschraubt ist, sodass durch Drehen der Justierhülse relativ zu dem Rohr und zu dem Schaft eine axiale Verstellbewegung des Rohrs relativ zu dem Gelenk ermöglicht ist, und einem am Rohrendbereich angreifenden Klemmmittel, mittels welchem der Rohrendbereich unter Zwischenschaltung der Justierhülse gegen den Außenumfang des Schafts gedrückt ist, sodass das Rohr, die Justierhülse und der Schaft relativ zueinander in ihrer Lage fixiert sind.

Die EP 1 062 144 B1 offenbart eine Spurstange für Kraftfahrzeuge mit einem wenigstens einseitig mit einem in einer ersten Drehrichtung gängigen Innengewinde versehenen, zumindest bereichsweise geschlitzten Rohr, in das endseitig eine Justierhülse eingeschraubt ist, wobei in die Justierhülse über ein zu der ersten Drehrichtung entgegengesetzt gängiges Innengewinde ein Kugelgelenkgehäuseschaft eines endseitig an der Spurstange vorhandenen Kugelgelenkes eingeschraubt ist und über eine an der Justierhülse angeformte Schlüsselfläche eine axiale Verstellbewegung des Rohres relativ zu dem Kugelgelenk ermöglicht wird, und die Justierhülse wenigstens einen Schlitz aufweist und eine auf der Außenmantelfläche des Rohres festgelegte Klemmschelle die Bauteile gegeneinander in ihrer Lage fixiert, wobei der Schlitz als Tauchschlitz bezeichnet und beidseitig begrenzt ist, so dass die Schlüsselfläche eine in sich geschlossene Fläche bildet.

Bei einer derartigen Spurstange kann das Problem auftreten, dass die Klemmkräfte nur unzureichend auf den Kugelgelenkgehäuseschaft übertragen werden, sodass sich die Schraubverbindung zwischen Justierhülse und Kugelgelenkgehäuseschaft lösen kann. Dies liegt einerseits an dem Tauchschlitz, da dessen geschlossene Enden ein Zusammendrücken des Schlitzes erschweren. Andererseits kann der Fall eintreten, dass der axiale Schlitz des Rohrs den axialen Schlitz der Justierhülse vollständig oder über einen großen Bereich überdeckt. Auch dies kann zu einer schlechten Übertragung der Klemmkräfte führen.

Ferner ist eine gattungsgemäße Spurstange im Dokument US6579025 offenbart.

Ausgehend hiervon liegt der Erfindung die Aufgabe zugrunde, bei einer Spur- oder Lenkstange der eingangs genannten Art eine unzureichende Übertragung der von dem Klemmmittel aufgebrachten Klemmkraft vermeiden zu können.

Diese Aufgabe wird mit einer Spur- oder Lenkstange nach Anspruch 1 gelöst. Bevorzugte Weiterbildungen der Spur- oder Lenkstange sind in den Unteransprüchen und in der nachfolgenden Beschreibung gegeben.

Die Spur- oder Lenkstange für ein Fahrzeug, insbesondere Kraftfahrzeug, umfasst ein Rohr, welches in einem sich in einer axialen Richtung erstreckenden Rohrendbereich ein in einer ersten Drehrichtung gängiges Innengewinde und einen oder wenigstens einen in axialer Richtung verlaufenden Schlitz aufweist, eine in den Rohrendbereich des Rohrs eingeschraubte und sich aus diesem mit einem Betätigungsbereich heraus erstreckende Justierhülse, die ein in einer der ersten Drehrichtung entgegengesetzten zweiten Drehrichtung gängiges Innengewinde und einen oder wenigstens einen in axialer Richtung verlaufenden Schlitz aufweist, der zumindest bereichsweise in dem Rohr angeordnet ist, ein Gelenk, welches einen axialen Schaft aufweist und mit diesem in die Justierhülse eingeschraubt ist, sodass durch Drehen der Justierhülse relativ zu dem Rohr und zu dem Schaft eine axiale Verstellbewegung des Rohrs relativ zu dem Gelenk ermöglicht ist, und ein am Rohrendbereich angreifendes Klemmmittel, mittels welchem der Rohrendbereich unter Zwischenschaltung der Justierhülse gegen den Außenumfang des Schafts gedrückt ist, sodass das Rohr, die Justierhülse und der Schaft relativ zueinander in ihrer Lage, insbesondere kraft- oder reibschlüssig, fixiert sind, wobei der Schlitz der Justierhülse in axialer Richtung mäander- oder sinusförmig verläuft und an seinem dem Betätigungsbereich abgewandten axialen Ende offen ist.

Dadurch, dass der Schlitz der Justierhülse in axialer Richtung mäander- oder sinusförmig verläuft, wird der Schlitz der Justierhülse von dem Schlitz des Rohrendbereichs nicht oder lediglich bereichsweise überdeckt. Somit kann eine bessere Übertragung der von dem Klemmmittel aufgebrachten Klemmkraft erzielt werden. Ferner ist der Schlitz der Justierhülse zumindest an seinem dem Betätigungsbereich abgewandten axialen Ende offen. Auch hierdurch kann eine bessere Übertragung der von dem Klemmmittel aufgebrachten Klemmkraft erzielt werden. Der Verlauf und/oder die Form des Schlitzes des Rohrendbereichs weicht dabei insbesondere vom Verlauf des Schlitzes der Justierhülse ab. Bevorzugt verläuft der Schlitz des Rohrendbereichs in axialer Richtung gerade oder näherungsweise gerade.

Der Schlitz der Justierhülse weist bevorzugt bogenförmige Abschnitte auf, die insbesondere in axialer Richtung hintereinander liegen. Vorzugsweise sind zwei unmittelbar benachbarte bogenförmige Abschnitte dabei einander entgegengesetzt gekrümmt.

Gemäß einer Weiterbildung überstreicht wenigstens ein bogenförmiger Abschnitt oder einer der bogenförmigen Abschnitte des Schlitzes der Justierhülse wenigstens ein Achtel, ein Viertel oder die Hälfte des Umfangs der Justierhülse. Bevorzugt überstreichen wenigstens zwei in axialer Richtung benachbarte oder hintereinander liegende und einander entgegengesetzt gekrümmte bogenförmige Abschnitte oder wenigstens zwei der in axialer Richtung benachbarten oder hintereinander liegenden und einander entgegengesetzt gekrümmten bogenförmigen Abschnitte des Schlitzes der Justierhülse jeweils wenigstens ein Achtel, ein Viertel oder die Hälfte des Umfangs der Justierhülse. Vorzugsweise überstreicht der Schlitz der Justierhülse wenigstens ein Viertel oder ein Achtel des Umfangs der Justierhülse oder den gesamten Umfang der Justierhülse. Hierdurch kann erzielt werden, dass ein nicht unerheblicher Teil des Schlitzes der Justierhülse einen größeren Abstand zum Schlitz des Rohrendbereichs aufweist, was sich positiv auf die Übertragung der von dem Klemmmittel aufgebrachten Klemmkraft auswirkt.

Vorteilhaft durchsetzt der Schlitz der Justierhülse die Wandung der Justierhülse. Darunter ist insbesondere zu verstehen, dass sich der Schlitz der Justierhülse in radialer Richtung durch die Wandung der Justierhülse hindurch erstreckt. Dies erleichtert ein Zusammendrücken des Schlitzes der Justierhülse aufgrund der von dem Klemmmittel aufgebrachten Klemmkraft.

Unter "radial" oder "radialer Richtung" wird insbesondere eine oder jedwede Richtung verstanden, die quer oder näherungsweise quer zur axialen Richtung verläuft.

Der Justierhülse ist insbesondere eine in axialer Richtung verlaufende Mittellängsachse zugeordnet. Vorteilhaft bildet die Mittellängsachse der Justierhülse auch eine Mittellängsachse des Rohrendbereichs und/oder des Schafts.

Die erste Drehrichtung bezieht sich bevorzugt auf die Mittellängsachse der Justierhülse und/oder auf die Mittellängsachse der Justierhülse als Drehachse und/oder auf eine Drehung um die Mittellängsachse der Justierhülse. Die zweite Drehrichtung bezieht sich bevorzugt auf die Mittellängsachse der Justierhülse und/oder auf die Mittellängsachse der Justierhülse als Drehachse und/oder auf eine Drehung um die Mittellängsachse der Justierhülse. Vorzugsweise ist eines der beiden Innengewinde ein Rechtsgewinde, wobei das andere der beiden Innengewinde bevorzugt ein Linksgewinde ist. Beispielsweise ist das Innengewinde des Rohrendbereichs ein Rechtsgewinde, wobei das Innengewinde der Justierhülse z.B. ein Linksgewinde ist. Alternativ ist das Innengewinde des Rohrendbereichs z.B. ein Linksgewinde, wobei das Innengewinde der Justierhülse z.B. ein Rechtsgewinde ist.

Der Schlitz der Justierhülse ist an seinem dem Betätigungsbereich abgewandten axialen Ende offen. Da dieses Ende in dem Rohr angeordnet ist, ist der Schlitz der Justierhülse an seinem in dem Rohr angeordneten axialen Ende offen. Gemäß einer ersten Variante ist der Schlitz der Justierhülse auch an seinem anderen axialen Ende offen, sodass der Schlitz der Justierhülse an seinen beiden axialen Enden offen ist. Hierdurch ergibt sich zwar eine sehr gute Übertragung der von dem Klemmmittel aufgebrachten Klemmkraft, allerdings besteht das Problem, dass sich die Justierhülse im Bereich ihres außerhalb des Rohrs liegenden axialen Schlitzendes durch wechselnde Biegebeanspruchungen des Schafts relativ zum Rohr im bestimmungsgemäßen Betrieb der Spur- oder Lenkstange aufhebeln kann. Gemäß einer zweiten Variante ist der Schlitz der Justierhülse daher an seinem dem Betätigungsbereich zugewandten axialen Ende geschlossen. Insbesondere erstreckt sich der Schlitz der Justierhülse dabei nicht durch den Betätigungsbereich hindurch. Dies verleiht der Justierhülse in ihrem außerhalb des Rohrs liegenden Endbereich mehr Stabilität und wirkt somit dem vorgenannten Aufhebeln entgegen.

Gemäß einer Ausgestaltung weist die Justierhülse an ihrem Betätigungsbereich eine unrunde Schlüsselfläche auf. An der Schlüsselfläche kann insbesondere ein Werkzeug, vorzugsweise formschlüssig, angreifen, mittels welchem die Justierhülse bei gelöstem Klemmmittel zur Erzielung der axialen Verstellbewegung relativ zu dem Schaft und zu dem Rohr verdrehbar ist. Die Schlüsselfläche ist z.B. polygonal. Bei dem Werkzeug handelt es sich beispielsweise um einen Maulschlüssel.

Das Rohr kann in seinem Rohrendbereich lediglich einen Schlitz aufweisen. Bevorzugt weist das Rohr in seinem Rohrendbereich aber mehrere, beispielswiese drei, Schlitze auf. Der Verlauf und/oder die Form jedes Schlitzes des Rohrendbereichs weicht dabei insbesondere vom Verlauf des Schlitzes der Justierhülse ab. Bevorzugt verlaufen die Schlitze des Rohrendbereichs in axialer Richtung jeweils gerade oder näherungsweise gerade. Vorteilhaft handelt es sich bei den Schlitzen des Rohrendbereichs um voneinander getrennte Schlitze. Insbesondere sind die Schlitze über den Umfang des Rohrendbereichs gleichmäßig verteilt angeordnet.

Vorteilhaft durchsetzt der Schlitz des Rohrendbereichs oder jeder der Schlitze des Rohrendbereichs die Wandung des Rohrs und/oder Rohrendbereichs. Darunter ist insbesondere zu verstehen, dass sich der Schlitz des Rohrendbereichs oder jeder der Schlitze des Rohrendbereichs in radialer Richtung durch die Wandung des Rohrs und/oder Rohrendbereichs hindurch erstreckt. Dies erleichtert ein Zusammendrücken des Schlitzes des Rohrendbereichs oder der Schlitze des Rohrendbereichs aufgrund der von dem Klemmmittel aufgebrachten Klemmkraft. Ferner ist der Schlitz des Rohrendbereichs oder jeder der Schlitze des Rohrendbereichs bevorzugt an seinem der Betätigungsfläche zugewandten axialen Ende offen. Auch dies erleichtert ein Zusammendrücken des Schlitzes des Rohrendbereichs oder der Schlitze des Rohrendbereichs aufgrund der von dem Klemmmittel aufgebrachten Klemmkraft. Das Rohr besteht bevorzugt aus Metall, insbesondere aus Stahl.

Das Klemmmittel kann einen integrativen Bestandteil des Rohrendbereichs bilden. Alternativ kann das Klemmmittel ein separates Bauteil bilden. Bevorzugt umfasst das Klemmmittel eine, insbesondere am Außenumfang des Rohrendbereichs festgelegte, Klemmschelle oder ist durch diese gebildet. Hierdurch kann die Erfindung auf einfache Weise auf bereits bestehende Lösungen übertragen werden, da in bestehenden Lösungen häufig eine Klemmschelle als Klemmmittel eingesetzt wird. Die Klemmschelle umringt insbesondere den Rohrendbereich des Rohrs, vorzugsweise zumindest teilweise. Vorteilhaft drückt das Klemmmittel und/oder die Klemmschelle den Rohrendbereich zusammen. Bevorzugt drückt das Klemmmittel und/oder die Klemmschelle den Rohrendbereich gegen die Außenumfangsfläche der Justierhülse, die ihrerseits gegen die Außenumfangsfläche des Schafts drückt.

Die Justierhülse weist bevorzugt ein Außengewinde auf, bei dem es sich insbesondere um ein in der ersten Drehrichtung gängiges Außengewinde handelt. Ferner besteht die Justierhülse bevorzugt aus Metall, insbesondere aus Stahl.

Die Justierhülse kann mehrere Schlitze aufweisen. Jeder der Schlitze der Justierhülse verläuft in diesem Fall bevorzugt in axialer Richtung mäander- oder sinusförmig und ist an seinem dem Betätigungsbereich abgewandten axialen Ende offen. Bei den Schlitzen der Justierhülse handelt es sich insbesondere um voneinander getrennte Schlitze. Bevorzugt weist die Justierhülse aber lediglich einen oder genau einen Schlitz auf. Hierdurch kann Fertigungsaufwand eingespart werden.

Der Schaft weist bevorzugt ein Außengewinde auf, bei dem es sich insbesondere um ein in der zweiten Drehrichtung gängiges Außengewinde handelt. Der Schaft besteht bevorzugt aus Metall, insbesondere aus Stahl.

Das Gelenk weist bevorzugt ein Gelenkgehäuse auf. Insbesondere ist der Schaft fest, vorzugsweise starr, mit dem Gelenkgehäuse verbunden und/oder bildet einen Teil desselben. Das Gelenkgehäuse besteht bevorzugt aus Metall, insbesondere aus Stahl. Vorteilhaft ist in dem Gelenkgehäuse ein Gelenkinnenteil bewegbar gelagert, welches beispielsweise ein Kugelzapfen ist. Das Gelenk ist vorzugsweise ein Kugelgelenk.

Das Gelenkinnenteil ist bevorzugt mit einer ersten Fahrzeugkomponente verbunden, und das Rohr ist an seinem dem Rohrendbereich abgewandten Ende und/oder im Abstand zum Rohrendbereich bevorzugt mit einer zweiten Fahrzeugkomponente verbunden. Die erste Fahrzeugkomponente ist vorzugsweise eine Radaufhängungskomponente des oder eines Fahrzeugs. Beispielsweise ist oder umfasst die erste Fahrzeugkomponente einen Radträger oder Achsschenkel. Die zweite Fahrzeugkomponente ist vorzugsweise eine Radaufhängungskomponente oder eine Komponente der Lenkung oder des Fahrzeugaufbaus des oder eines Fahrzeugs. Beispielsweise ist oder umfasst die zweite Fahrzeugkomponente ein Gelenk.

Die Erfindung wird nachfolgend anhand bevorzugter Ausführungsformen unter Bezugnahme auf die Zeichnung beschrieben. In der Zeichnung zeigen:
- Fig. 1: eine Seitenansicht einer Spur- oder Lenkstange gemäß einer ersten Ausführungsform,
- Fig. 2: eine stirnseitige Ansicht des aus Fig. 1 ersichtlichen Rohrs in Einzeldarstellung,
- Fig. 3: eine perspektivische Ansicht der aus Fig. 1 ersichtlichen Justierhülse in Einzeldarstellung und
- Fig. 4: eine perspektivische Ansicht einer Justierhülse gemäß einer zweiten Ausführungsform.

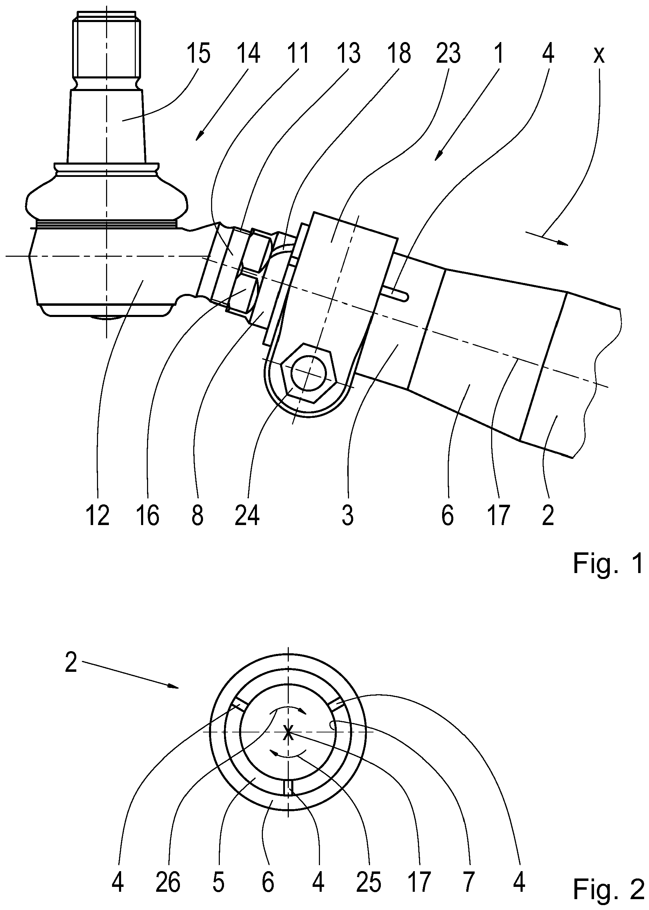

Aus Fig. 1 ist eine Seitenansicht einer Spur- oder Lenkstange 1 gemäß einer ersten Ausführungsform ersichtlich, die ein Rohr 2 mit einem Rohrendbereich 3 umfasst, in dem drei in einer axialen Richtung x geradlinig verlaufende Schlitze 4 vorgesehen sind, welche die Wandung 5 des Rohrs 2 durchsetzen und zum axialen Ende des Rohrs 2 hin offen sind. Ferner verjüngt sich das Rohr 2 in einem Übergangsbereich 6 zu seinem Rohrendbereich 3 hin. Die Schlitze 4 sind jeweils um 120° zueinander versetzt, was aus Fig. 2 ersichtlich ist, die eine stirnseitige Ansicht des Rohrs 2 in Einzeldarstellung zeigt.

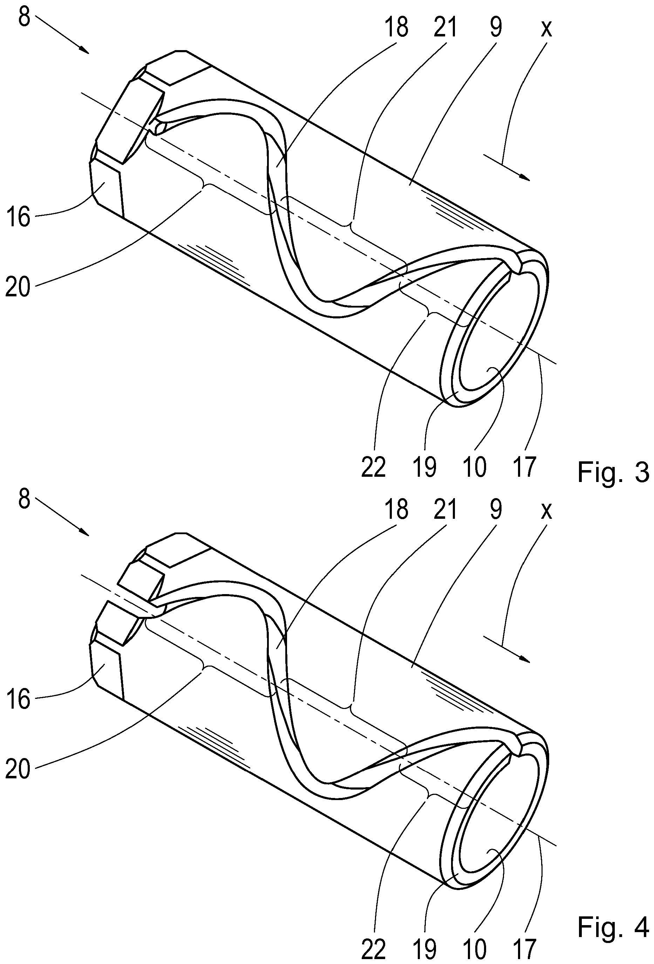

Der Rohrendbereich 3 weist ein in einer ersten Drehrichtung 25 gängiges Innengewinde 7 auf, in welches eine Justierhülse 8 eingeschraubt ist, die dazu ein zu dem Innengewinde 7 passendes Außengewinde 9 aufweist. Ferner weist die Justierhülse 8 ein in einer zu der ersten Drehrichtung 25 entgegengesetzten zweiten Drehrichtung 26 gängiges Innengewinde 10 auf, was aus Fig. 3 ersichtlich ist, die eine perspektivische Ansicht der Justierhülse 8 in Einzeldarstellung zeigt. In die Justierhülse 8 ist ein Schaft 11 eines Gelenkgehäuses 12 eingeschraubt, der dazu ein zu dem Innengewinde 10 passendes Außengewinde 13 aufweist. Die Gewinde 7 und 9 bilden jeweils Linksgewinde, wohingegen die Gewinde 10 und 13 jeweils ein Rechtsgewinde bilden. Alternativ ist es möglich, dass die Gewinde 7 und 9 jeweils ein Rechtsgewinde bilden, wohingegen die Gewinde 10 und 13 jeweils ein Linksgewinde bilden.

Das Gelenkgehäuse 12 ist Teil eines Gelenks 14, welches ein in dem Gelenkgehäuse 12 bewegbar gelagertes und sich aus diesem heraus erstreckendes Gelenkinnenteil 15 aufweist. Das Gelenk 14 ist hier insbesondere ein Kugelgelenk, sodass das Gelenkinnenteil 15 insbesondere ein Kugelzapfen ist.

Die Justierhülse 8 weist einen außerhalb des Rohrs 3 angeordneten Betätigungsbereich 16 in Form einer polygonalen Schlüsselfläche auf, an die ein Werkzeug, wie z.B. ein Maulschlüssel, angreifen kann. Mittels des Werkzeugs kann die Justierhülse 8 um ihre in axialer Richtung x verlaufende Mittellängsachse 17 gedreht werden, die gleichzeitig die Mittellängsachse des Rohrendbereichs 3 und die Mittellängsachse des Schafts 11 bildet. Aufgrund der unterschiedlichen Drehrichtungen der Gewinde führt eine Drehung der Justierhülse 8 um die Mittellängsachse 17 relativ zu dem Rohr 2 und zu dem Schaft 11 zu einer axialen Verstellbewegung des Rohrs 2 relativ zu dem Gelenk 14.

In der Justierhülse ist ein Schlitz 18 vorgesehen, der die Wandung 19 der Justierhülse 8 durchsetzt und zu ihrem dem Betätigungsbereich 16 abgewandten axialen Ende hin offen ist. Der Schlitz 18 verläuft in axialer Richtung x mäander- oder sinusförmig und weist somit mehrere in axialer Richtung x hintereinander liegende bogenförmige Abschnitte 20, 21 und 22 auf, wobei die beiden unmittelbar zueinander benachbarten Abschnitte 20 und 21 einander entgegengesetzt gekrümmt sind. Ferner sind die beiden unmittelbar zueinander benachbarten Abschnitte 21 und 22 einander entgegengesetzt gekrümmt. Die bogenförmigen Abschnitte überstreichen dabei jeweils in etwa ein Achtel des Umfangs der Justierhülse 8, sodass der Schlitz 18 in etwa ein Viertel des Umfangs der Justierhülse 8 überstreicht.

Auf den Rohrendbereich 3 ist ein Klemmmittel 23 in Form einer Klemmschelle aufgesetzt, welches bzw. welche mittels einer Schraubverbindung 24 gegen den Außenumfang des Rohrendbereichs 3 gedrückt ist. Der Rohrendbereich 3 drückt dadurch seinerseits gegen den Außenumfang der Justierhülse 8, die dadurch ihrerseits gegen den Außenumfang des Schafts 11 drückt. Hierdurch sind der Rohrendbereich 3, die Justierhülse 8 und der Schaft 11 reibschlüssig aneinander festgelegt. Vor einem Drehen der Justierhülse 8 zur Erzielung der oben angesprochenen axialen Verstellbewegung muss das Klemmmittel 23 daher zunächst gelöst werden, was durch Lockern oder Lösen der Schraubverbindung 24 erfolgt.

Aus Fig. 4 ist eine Justierhülse 8 einer Spur- oder Lenkstange gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind. Im Unterschied zur ersten Ausführungsform ist der Schlitz 18 der Justierhülse 8 an seinen beiden axialen Enden offen und erstreckt sich somit auch in axialer Richtung x durch den Betätigungsbereich 16 hindurch. Abgesehen von diesen Unterschieden ist die zweite Ausführungsform zu der ersten Ausführungsform identisch, sodass zur weiteren Beschreibung der zweiten Ausführungsform auf die Beschreibung der ersten Ausführungsform verwiesen wird. Insbesondere kann die Justierhülse gemäß der zweiten Ausführungsform die Justierhülse gemäß der ersten Ausführungsform ersetzen.

### Bezugszeichen

- 1: Spur- oder Lenkstange
- 2: Rohr
- 3: Rohrendbereich
- 4: Schlitz in Rohrendbereich
- 5: Wandung des Rohrs
- 6: Übergangsbereich des Rohrs
- 7: Innengewinde des Rohrendbereichs
- 8: Justierhülse
- 9: Außengewinde der Justierhülse
- 10: Innengewinde der Justierhülse
- 11: Schaft des Gelenkgehäuses
- 12: Gelenkgehäuse
- 13: Außengewinde des Schafts
- 14: Gelenk
- 15: Gelenkinnenteil
- 16: Betätigungsbereich / Schlüsselfläche der Justierhülse
- 17: Mittellängsachse
- 18: Schlitz der Justierhülse
- 19: Wandung der Justierhülse
- 20: bogenförmiger Abschnitt des Schlitzes der Justierhülse
- 21: bogenförmiger Abschnitt des Schlitzes der Justierhülse
- 22: bogenförmiger Abschnitt des Schlitzes der Justierhülse
- 23: Klemmmittel / Klemmschelle
- 24: Schraubverbindung der Klemmschelle
- 25: erste Drehrichtung
- 26: zweite Drehrichtung (der ersten Drehrichtung entgegengesetzt)
- x: axiale Richtung

## Patentansprüche

1. Spur- oder Lenkstange für ein Fahrzeug, mit einem Rohr (2), welches in einem sich in einer axialen Richtung (x) erstreckenden Rohrendbereich (3) ein in einer ersten Drehrichtung gängiges Innengewinde (7) und wenigstens einen in axialer Richtung (x) verlaufenden Schlitz (4) aufweist, einer in den Rohrendbereich (3) des Rohrs (2) eingeschraubten und sich aus diesem mit einem Betätigungsbereich (16) heraus erstreckenden Justierhülse (8), die ein in einer der ersten Drehrichtung entgegengesetzten zweiten Drehrichtung gängiges Innengewinde (10) und wenigstens einen in axialer Richtung (x) verlaufenden Schlitz (18) aufweist, der zumindest bereichsweise in dem Rohr (2) angeordnet ist, einem Gelenk (14), welches einen axialen Schaft (11) aufweist und mit diesem in die Justierhülse (8) eingeschraubt ist, sodass durch Drehen der Justierhülse (8) relativ zu dem Rohr (2) und zu dem Schaft (11) eine axiale Verstellbewegung des Rohrs (2) relativ zu dem Gelenk (14) ermöglicht ist, und einem am Rohrendbereich (3) angreifenden Klemmmittel (23), mittels welchem der Rohrendbereich (3) unter Zwischenschaltung der Justierhülse (8) gegen den Außenumfang des Schafts (11) gedrückt ist, sodass das Rohr (2), die Justierhülse (8) und der Schaft (11) relativ zueinander in ihrer Lage fixiert sind, **dadurch gekennzeichnet, dass** der Schlitz (18) der Justierhülse (8) in axialer Richtung (x) mäander- oder sinusförmig verläuft und an seinem dem Betätigungsbereich (16) abgewandten axialen Ende offen ist.

2. Spur- oder Lenkstange nach Anspruch 1, **dadurch gekennzeichnet, dass** wenigstens zwei in axialer Richtung (x) benachbarte und einander entgegengesetzt gekrümmte bogenförmige Abschnitte (10, 21) des Schlitzes (18) der Justierhülse (8) jeweils wenigstens ein Achtel des Umfangs der Justierhülse (8) überstreichen.

3. Spur- oder Lenkstange nach Anspruch 1 oder 2, **dadurch gekennzeichnet, dass** der Schlitz (18) der Justierhülse (8) die Wandung (19) der Justierhülse durchsetzt.

4. Spur- oder Lenkstange nach einem der vorangehenden Ansprüche, **dadurch gekennzeichnet, dass** der Schlitz (18) der Justierhülse (8) an seinem dem Betätigungsbereich (16) zugewandten axialen Ende geschlossen ist.

5. Spur- oder Lenkstange nach einem der Ansprüche 1 bis 3, **dadurch gekennzeichnet, dass** der Schlitz (18) der Justierhülse (8) an seinen beiden axialen Enden offen ist.

6. Spur- oder Lenkstange nach einem der vorangehenden Ansprüche, **dadurch gekennzeichnet, dass** die Justierhülse (8) an ihrem Betätigungsbereich (16) eine unrunde Schlüsselfläche aufweist.

7. Spur- oder Lenkstange nach einem der vorangehenden Ansprüche, **dadurch gekennzeichnet, dass** der Schlitz (4) des Rohrendbereichs (3) in axialer Richtung (x) gerade verläuft.

8. Spur- oder Lenkstange nach einem der vorangehenden Ansprüche, **dadurch gekennzeichnet, dass** der Schlitz (4) des Rohrendbereichs (3) die Wandung (5) des Rohrs (2) durchsetzt und an seinem der Betätigungsfläche (16) zugewandten axialen Ende offen ist.

9. Spur- oder Lenkstange nach einem der vorangehenden Ansprüche, **dadurch gekennzeichnet, dass** das Klemmmittel (23) eine am Außenumfang des Rohrendbereichs (3) festgelegte Klemmschelle umfasst.

## Claims

1. Track or steering rod for a vehicle, having a tube (2) which, in a tube end region (3) which extends in an axial direction (x), has an internal thread (7) which is threaded in a first rotational direction and at least one slot (4) which runs in the axial direction (x), having an adjusting sleeve (8) which is screwed into the tube end region (3) of the tube (2), extends out of the latter with an actuating region (16), and has an internal thread (10), which is threaded in a second rotational direction which opposes the first rotational direction, and at least one slot (18) which runs in the axial direction (x) and is arranged at least in regions in the tube (2), having a joint (14) which has an axial shank (11) and is screwed by way of the latter into the adjusting sleeve (8), with the result that an axial adjusting movement of the tube (2) relative to the joint (14) is made possible by way of rotation of the adjusting sleeve (8) relative to the tube (2) and to the shank (11), and having a clamping means (23) which acts on the tube end region (3) and by means of which, with the adjusting sleeve (8) connected in between, the tube end region (3) is pressed against the outer circumference of the shank (11), with the result that the tube (2), the adjusting sleeve (8) and the shank (11) are fixed in their position relative to one another, **characterized in that** the slot (18) of the adjusting sleeve (8) runs in a serpentine or sinusoidal manner in the axial direction (x) and is open at its axial end which faces away from the actuating region (16) .

2. Track or steering rod according to Claim 1, **characterized in that** at least two arcuate sections (10, 21) of the slot (18) of the adjusting sleeve (8) which are adjacent in the axial direction (x) and are curved in an opposed manner with respect to one another sweep over in each case at least one eighth of the circumference of the adjusting sleeve (8).

3. Track or steering rod according to Claim 1 or 2, **characterized in that** the slot (18) of the adjusting sleeve (8) penetrates the wall (19) of the adjusting sleeve.

4. Track or steering rod according to one of the preceding claims, **characterized in that** the slot (18) of the adjusting sleeve (8) is closed at its axial end which faces the actuating region (16).

5. Track or steering rod according to one of Claims 1 to 3, **characterized in that** the slot (18) of the adjusting sleeve (8) is open at its two axial ends.

6. Track or steering rod according to one of the preceding claims, **characterized in that** the adjusting sleeve (8) has a non-circular key face on its actuating region (16).

7. Track or steering rod according to one of the preceding claims, **characterized in that** the slot (4) of the tube end region (3) runs in a straight manner in the axial direction (x).

8. Track or steering rod according to one of the preceding claims, **characterized in that** the slot (4) of the tube end region (3) penetrates the wall (5) of the tube (2) and is open at its axial end which faces the actuating face (16).

9. Track or steering rod according to one of the preceding claims, **characterized in that** the clamping means (23) comprises a clamping clip which is fixed on the outer circumference of the tube end region (3).

## Revendications

1. Barre d'accouplement ou de direction pour véhicule, présentant un tube (2) qui présente dans une partie d'extrémité (3) du tube qui s'étend dans une direction axiale (x) un filet intérieur (7) avançant dans un premier sens de rotation et au moins une fente (4) s'étendant dans la direction axiale (x), une douille d'ajustement (8) vissée dans la partie d'extrémité (3) du tube (2) et s'étendant hors de ce dernier par une partie d'actionnement (16), présentant un filet intérieur (10) qui avance dans un deuxième sens de rotation opposé au premier sens de rotation et une fente (18) s'étendant dans la direction axiale (x) et disposée au moins en partie dans le tube (2), une articulation (14) qui présente une tige axiale (11) et qui est par cette dernière vissée dans la douille d'ajustement (8) de telle sorte qu'un déplacement axial d'ajustement du tube (2) par rapport à l'articulation (14) soit rendu possible par rotation de la douille d'ajustement (8) par rapport au tube (2) et par rapport à la tige (11), et un moyen de serrage (23) qui engage la partie d'extrémité (3) du tube et au moyen duquel la partie d'extrémité (3) du tube est repoussée contre la périphérie extérieure de la tige (11) par l'intermédiaire de la douille d'ajustement (8) de telle sorte que le tube (2), la douille d'ajustement (8) et la tige (11) soient immobilisés l'un par rapport à l'autre,
**caractérisée en ce que** la fente (18) de la douille d'ajustement (8) s'étend en méandres ou en sinus dans la direction axiale (x) et est ouverte à son extrémité axiale non tournée vers la partie d'actionnement (16).

2. Barre d'accouplement ou de direction selon la revendication 1, **caractérisée en ce qu'**au moins deux sections (10, 21), voisines dans la direction axiale (x) et courbées en arc de cercle en opposition l'une à l'autre, de la fente (18) de la douille d'ajustement (8), recouvrent chacune au moins un huitième de la périphérie de la douille d'ajustement (8).

3. Barre d'accouplement ou de direction selon les revendications 1 ou 2, **caractérisée en ce que** la fente (18) de la douille d'ajustement (8) traverse la paroi (19) de la douille d'ajustement.

4. Barre d'accouplement ou de direction selon l'une des revendications précédentes, **caractérisée en ce que** la fente (18) de la douille d'ajustement (8) est fermée à son extrémité axiale tournée vers la partie d'actionnement (16).

5. Barre d'accouplement ou de direction selon l'une des revendications 1 à 3, **caractérisée en ce que** la fente (18) de la douille d'ajustement (8) est ouverte à ses deux extrémités axiales.

6. Barre d'accouplement ou de direction selon l'une des revendications précédentes, **caractérisée en ce que** la douille d'ajustement (8) présente une surface de clé non circulaire sur sa partie d'actionnement (16).

7. Barre d'accouplement ou de direction selon l'une des revendications précédentes, **caractérisée en ce que** la fente (4) de la partie d'extrémité (3) du tube s'étend en ligne droite dans la direction axiale (x).

8. Barre d'accouplement ou de direction selon l'une des revendications précédentes, **caractérisée en ce que** la fente (4) de la partie d'extrémité (3) du tube traverse la paroi (5) du tube (2) et est ouverte à son extrémité axiale tournée vers la partie d'actionnement (16) .

9. Barre d'accouplement ou de direction selon l'une des revendications précédentes, **caractérisée en ce que** le moyen de serrage (23) comporte une coquille de serrage fixée sur la périphérie extérieure de la partie d'extrémité (3) du tube.
